# EUROPÄISCHE PATENTSCHRIFT

(11) **EP 2 628 397 B1**
(45) Veröffentlichungstag und Bekanntmachung des Hinweises auf die Patenterteilung: **08.10.2014**
(21) Anmeldenummer: 13167730.4
(22) Anmeldetag: 15.03.2010
(51) Int. Cl.: A23L 1/236, A23L 2/60, A23G 3/44, A23G 3/42

(54) **Sucralosehaltige Süßstoffzusammensetzungen**
Sucralose-containing sweetener compositions
Compositions édulcorantes renfermant du sucralose

(30) Priorität: 18.05.2009 DE 102009021812; 12.06.2009 DE 102009024666
(43) Veröffentlichungstag der Anmeldung: 21.08.2013
(62) Teilanmeldung aus: 10710796.3
(73) Patentinhaber: Krüger GmbH & Co. KG, 51469 Bergisch-Gladbach (DE)
(72) Erfinder: Krüger, Willibert, 51467 Bergisch Gladbach (DE)
(74) Vertreter: Von Rohr Patentanwälte Partnerschaft mbB

(56) Entgegenhaltungen:
- EP-A1- 0 237 403
- WO-A2-2008/036270
- WO-A2-2009/100333
- DE-A1- 4 416 769
- GB-A- 902 369
- JP-A- 2009 091 292
- US-A- 3 903 255
- US-A1- 2008 032 023

## Beschreibung

Die vorliegende Erfindung betrifft das Gebiet der Lebensmitteltechnologie, insbesondere Süßstoffzusammensetzungen bzw. Zusammensetzungen mit reduziertem physiologischem Brennwert (Energiegehalt) zum Süßen von Lebensmitteln.

Insbesondere betrifft die vorliegende Erfindung eine kompaktierte, insbesondere verpresste Zusammensetzung mit reduziertem physiologischem Brennwert (Energiegehalt) zum Süßen von Lebensmitteln sowie ein Verfahren zu ihrer Herstellung.

Des weiteren betrifft die vorliegende Erfindung eine Zusammensetzung mit reduziertem physiologischem Brennwert (Energiegehalt) zum Süßen von Lebensmitteln, insbesondere in Form einer Streu- oder Tafelsüße, sowie ein Verfahren zu ihrer Herstellung.

Schließlich betrifft die vorliegende Erfindung die Verwendung der erfindungsgemäßen Zusammensetzungen.

Gesunde und insbesondere kalorienbewusste Ernährung spielt in der Gesellschaft und in der Gesundheitspolitik eine immer wachsende Bedeutung. Produkte, welche kalorienreduziert sind und als alternatives Süßungsmittel zu klassischem Kristallzucker (d. h. Saccharose) verwendet werden, sind bereits aus dem Stand der Technik bekannt. Dabei kann es sich beispielsweise um sogenannte Streu- oder Tafelsüßen, die in Art von herkömmlichem Kristallzucker zu verwenden sind, um Tabletten bzw. Kompakte oder um wässrige Zusammensetzungen ("Flüssigsüßen") handeln. Die süßenden Komponenten sind dabei meist herkömmliche Süßstoffe, wie z. B. Saccharin, insbesondere Natriumsaccharinat, Acesulfam K, Cyclamat, Aspartam, Thaumatin etc. oder aber gegebenenfalls auch Mischungen verschiedener Süßstoffe, wie z.B. Cyclamat und Saccharin.

Die Süßkraft der einzelnen Süßstoffe variiert dabei in weiten Bereichen: Üblicherweise wird reine Saccharose mit einer Süßkraft von 1 eingestuft, so dass dann Süßstoffe eine Süßkraft insbesondere von 10 bis 3.000 aufweisen, was bedeutet, dass 10 g bis 3.000 g Saccharose dieselbe Süßkraft wie 1 g des jeweiligen Süßstoffes besitzen.

Aufgrund dieser hohen Süßintensität können Süßstoffe für die Endanwendung aber meist nicht als Reinsubstanz angeboten und abgegeben werden. Statt dessen werden sie in den oben beschriebenen Formen - d. h. zum Streuen, als Tabletten oder als Flüssigsüße - angeboten.

Die Herstellung der jeweiligen Angebotsform erfolgt im allgemeinen dergestalt, dass der oder die Süßstoffe mit den weiteren Komponenten vermischt und zu der jeweiligen Darreichungsform verarbeitet werden, d. h. beispielsweise zu Süßstofftabletten, Streusüßen oder Flüssigsüßen.

Die Art und die Anteile der zugesetzten Stoffe variieren auch deshalb, da diese oftmals für besondere Anwendungsmedien oder auf Basis bestimmter ernährungsphysiologischer Besonderheiten entwickelt werden. Beispielsweise können Zusammensetzungen bereitgestellt werden, die frei sind von Milchzucker oder dergleichen.

Üblicherweise werden die einzelnen Rohwaren abgewogen und miteinander vermischt. Bei Süßstoffen, die selbst eine schmierende Eigenschaft haben, wird ebenso vorgegangen.

Im Fall von Sucralose wurde im Rahmen der vorliegenden Erfindung jedoch überraschenderweise gefunden, dass nicht nur die Art und der Anteil der Zutaten einen entscheidenden Einfluss auf die Endproduktqualität haben, sondern auch die Art und Weise wie die einzelnen Komponenten verarbeitet werden, bevor das Enderzeugnis ausgeformt wird. Wie die Anmelderin nämlich unerwarteterweise herausgefunden hat, weichen die physikalisch-chemischen Eigenschaften von Sucralose gegenüber anderen handelsüblichen Süßstoffen ab: Sucralose neigt beim weiteren Verarbeiten zum Kleben; dies führt beispielsweise beim Pressen (z. B. bei der Herstellung von Süßstofftabletten) dazu, dass entweder keine akzeptablen Tabletten entstehen oder aber sich die Maschinenleistung deutlich verringert und es somit zu keinen wirtschaftlichen Ausbeuten kommt. Die wirtschaftlichen Parameter sind für die qualitativen Aspekte des Endproduktes zweitrangig. Parameter, wie Tablettengewicht, Aussehen und Konsistenz, sind für den Endverbraucher wichtige Kriterien, die eine sichere und gleichbleibende Anwendbarkeit garantieren.

Zwar existieren schon kalorienreduzierte Produkte auf Sucralosebasis im Markt, jedoch führen hierbei die eingesetzten Zuschlagstoffe, welche zugegeben werden, um die Herstellung zu verbessern, zu unerwünschten sensorischen Veränderungen, die unter bestimmten Umständen auftreten können, insbesondere in Abhängigkeit von den Einflussfaktoren Temperatur und Zeit.

So beschreibt die US 2008/0032023 A1 betrifft eine Süßstoffzusammensetzung, welche Maltodextrin sowie einen Süßstoff umfasst. Die Zusammensetzung wird vorzugsweise durch Sprühtrocknung hergestellt, bei welcher CO₂ in den Zuflussstrom des Sprühtrockners eingebracht wird.

Ausgehend vom Stand der Technik lag der Erfindung die Aufgabe zugrunde, die zuvor geschilderten Nachteile im Stand der Technik zu überwinden.

Insbesondere lag der Erfindung die Aufgabe zugrunde, eine kalorienreduzierte Zusammensetzung zu finden, die leichter herzustellen ist, in Aussehen und Erscheinungsform attraktiver erscheint und von hoher und dauerhafter sensorischer Qualität ist.

Eine weitere, der Erfindung zugrunde liegende Aufgabe besteht in der Bereitstellung einer Zusammensetzung mit reduziertem physiologischem Brennwert (Energiegehalt) zum Süßen von Lebensmitteln, die als Streu- bzw. Tafelsüße vorliegt.

Gegenstand der vorliegenden Erfindung ist somit eine Zusammensetzung mit reduziertem physiologischem Brennwert (Energiegehalt) gemäß Anspruch 1. Weitere, insbesondere vorteilhafte Ausgestaltungen sind Gegenstand der diesbezüglichen Unteransprüche.

Weiterer Gegenstand der vorliegenden Erfindung ist ein Verfahren zur Herstellung der Zusammensetzung, die insbesondere in Form einer Streu- oder Tafelsüße vorliegt, gemäß Anspruch 9.

Schließlich ist Gegenstand der vorliegenden Erfindung ist die Verwendung der Zusammensetzungen nach der vorliegenden Erfindung gemäß Anspruch 10.

Es versteht sich von selbst, dass im folgenden besondere Ausgestaltungen und Ausführungsformen, welche nur im Zusammenhang mit einem Erfindungsaspekt beschrieben sind, auch in Bezug auf die anderen Erfindungsaspekte entsprechend gelten, ohne dass dies einer ausdrücklichen Erwähnung bedarf.

Bei allen nachstehend genannten relativen bzw. prozentualen, insbesondere gewichtsbezogenen Mengenangaben ist zudem zu beachten, dass diese im Rahmen der vorliegenden Erfindung vom Fachmann derart auszuwählen sind, dass in der Summe - gegebenenfalls unter Einbeziehung weiterer Komponenten bzw. Inhaltsstoffe bzw. Zusatzstoffe bzw. Bestandteile, insbesondere wie nachfolgend definiert - stets 100 % resultieren. Dies versteht sich für den Fachmann aber von selbst.

Im übrigen gilt, dass der Fachmann anwendungsbezogen oder einzelfallbedingt von nachfolgend aufgeführten Mengenangaben abweichen kann, ohne dass er den Rahmen der vorliegenden Erfindung verlässt.

Diese spezielle erfindungsgemäße Aufgabe wird gelöst durch einen weiteren, dritten Aspekt der vorliegenden Erfindung. Weiterer Gegenstand der vorliegenden Erfindung - gemäß einem **ersten** Aspekt der vorliegenden Erfindung - ist somit eine Zusammensetzung mit reduziertem physiologischem Brennwert (Energiegehalt) zum Süßen von Lebensmitteln in Form einer Streu- oder Tafelsüße, wobei die Zusammensetzung in Form von Agglomeraten vorliegt und mindestens einen Süßstoff als Süßungsmittel sowie mindestens einen Agglomeratbildner umfasst,
- wobei der Süßstoff Sucralose ist und die Menge an Sucralose zwischen 0,001 und 20 Gew.%, bezogen auf die Zusammensetzung, liegt;
- wobei der Agglomeratbildner ausgewählt ist aus Zuckeraustauschstoffen und/oder Polysacchariden und die Menge an Agglomeratbildner zwischen 50 und 99,999 Gew.-%, bezogen auf die Zusammensetzung, liegt;
- wobei die Schüttdichte der Zusammensetzung im Bereich von 50 bis 120 g/l liegt;
- wobei die Zusammensetzung, bezogen auf die Zusammensetzung, eine Gesamtrestfeuchte von 2 bis 5 Gew.-% aufweist; und
- wobei die mittlere Teilchengröße der Agglomerate, bestimmt als D₅₀-Wert, im Bereich von 50 bis 250 µm liegt und 80 % der Agglomeratteilchen Teilchendurchmesser im Bereich von 75 bis 175 µm aufweisen.

Bei der erfindungsgemäßen Zusammensetzung dieses ersten Aspekts handelt es sich um eine Streu- oder Tafelsüße. Sie eignet sich somit als Ersatz zum Nachsüßen von Getränken, aber auch zum Süßen beim Backen, Kochen oder Zubereiten von Speisen und Getränken. Diese Zusammensetzung wird in der Art von Saccharose verwendet (z. B. mit einem Löffel oder dergleichen).

Diese erfindungsgemäße Zusammensetzung zeichnet sich insgesamt durch eine signifikante Kalorienreduktion aus, was insbesondere durch den Einsatz von Agglomeratbildnern, insbesondere auf Basis von Stärke oder Stärkederivaten bzw. deren Mischungen und/oder auf Basis von Zuckeralkoholen, erreicht wird.

Aufgrund des gegenüber den im Stand der Technik bekannten Zusammensetzungen deutlich verminderten Kaloriengehaltes ist die erfindungsgemäße Zusammensetzung gemäß dem ersten Aspekt der vorliegenden Erfindung ernährungsphysiologisch verbessert, wobei gleichzeitig die kariogene Wirkung vermindert ist. Aufgrund der Verwendung von Sucralose kann zudem die Menge an erfindungsgemäßer Zusammensetzung für die Verwendung als Süßstoff gegenüber dem Stand der Technik verringert werden, so dass die erfindungsgemäße Zusammensetzung besonders leicht dosierbar zu dem zu süßenden Lebensmittel zugegeben werden kann.

Sucralose ist ein an sich bekannter Süßstoff, der auch unter den Bezeichnungen Chlorsucrose, Trichlorgalactosaccharose (TGS) oder 1,6-Dichlor-1,6-dideoxy-β-D-fructofuranosyl-4-chlor-4-deoxy-α-D-galactopyranosid bekannt ist. Die Süßkraft von Sucralose liegt um ein Vielfaches über der von Saccharose, so dass die erfindungsgemäße Zusammensetzung einen verringerten Brennwert aufweist.

Im Unterschied zu Zuckeraustauschstoffen versteht man unter Süßstoffen Verbindungen synthetischer oder natürlicher Herkunft, die keinen oder im Verhältnis zur Süßkraft einen vernachlässigbaren physiologischen Brennwert besitzen, weswegen sie im Englischen aus als *"non-nutritive sweeteners"* bezeichnet werden, und eine um ein Vielfaches höhere Süßkraft als Saccharose aufweisen. Die Süßkraft einer Verbindung ist durch die Verdünnung gegeben, bei der sie ebenso süß wie eine Saccharoselösung schmeckt (isosüße Lösung). Für weitere Einzelheiten zu dem Begriff der Süßstoffe kann insbesondere verwiesen werden auf Römpp Chemielexikon, 10. Auflage, Georg-Thieme-Verlag, Stuttgart/New York, Band 5, 1998, Seiten 4302 bis 4304, Stichwort: "Süßstoffe", sowie die dort referierte Literatur, deren jeweiliger Inhalt hiermit durch Bezugnahme eingeschlossen ist.

Wie zuvor beschrieben, enthält die erfindungsgemäße Zusammensetzung gemäß dem ersten Erfindungsaspekt üblicherweise mindestens einen Agglomeratbildner, insbesondere auf Basis von Stärke oder Stärkederivaten bzw. deren Mischungen und/oder auf Basis von Zuckeralkoholen, erreicht wird.

Was die erfindungsgemäß als Agglomeratbildner verwendbaren Stärkederivate anbelangt, so können diese ausgewählt sein aus Stärkeabbauprodukten, insbesondere Dextrinen und Maltodextrinen, vorzugsweise Maltodextrinen. Für weitergehende Einzelheiten zu Dextrinen und Maltodextrinen kann insbesondere verwiesen werden auf Römpp Chemielexikon, 10. Auflage, Georg-Thieme-Verlag, Stuttgart/New York, Band 2, 1997, Seite 928, Stichwort: "Dextrine", und Band 4, 1998, Seite 2513, Stichwort: "Maltodextrine", und auf Römpp Lexikon Lebensmittelchemie, Georg-Thieme-Verlag, Stuttgart/New York, 9. Auflage, 1995, Seite 213, Stichwort: "Dextrine", und Seite 518, Stichwort: "Maltodextrine", sowie auf die dort jeweils referierte Literatur, deren jeweiliger Inhalt durch Bezugnahme eingeschlossen ist.

Die zuvor angeführten Zuckeralkohole werden auch zu den sogenannten Zuckeraustauschstoffen gezählt. Unter dem Begriff der Zuckeraustauschstoffe versteht man eine Sammelbezeichnung für Stoffe, welche anstelle von Saccharose zur Süßung von Lebensmitteln verwendet werden. Im Gegensatz zu den mitunter intensiv schmeckenden Süßstoffen, von denen der Begriff der Zuckeraustauschstoffe im allgemeinen abgegrenzt wird, werden Zuckeraustauschstoffe technologisch wie Saccharose eingesetzt, d. h. sie besitzen einen "Körper" und einen physiologischen Brennwert (nutritive Zuckeraustauschstoffe). Die Süßkraft entspricht in weiten Grenzen etwa der von Saccharose. Der physiologische Vorteil der Zuckeraustauschstoffe im Vergleich zur Saccharose liegt in der insulinunabhängigen Metabolisierung (Diabetiker) und in der zum Teil verminderten kariogenen Wirkung. Für einige Zuckeraustauschstoffe, wie z. B. Xylit, ist sogar eine antikariogene Wirkung beschrieben. Die Zuckeraustauschstoffe und die davon verschiedenen Süßstoffe werden gemeinsam als Süßungsmittel bezeichnet. Für weitergehende Einzelheiten zu dem Begriff der Zuckeraustauschstoffe kann beispielsweise verwiesen werden auf Römpp Lexikon Chemie, Band 6, 10. Auflage, Georg-Thieme-Verlag, Stuttgart/New York, 1999, Seite 5098 bis 5100, Stichwort: "Zuckeraustauschstoffe", und auf Römpp Lexikon Lebensmittelchemie, 9. Auflage, Georg-Thieme-Verlag, Stuttgart/New York, Seite 955, Stichwort: "Zuckeraustauschstoffe" sowie auf die dort jeweils referierte Literatur, deren jeweiliger Inhalt hiermit durch Bezugnahme eingeschlossen ist.

Der Begriff der zu den Zuckeraustauschstoffen zählenden Zuckeralkohole (Polyole), wie er erfindungsgemäß verwendet wird, ist eine Gruppenbezeichnung für im allgemeinen kristalline, gut wasserlösliche Polyhydroxyverbindungen, die durch Reduktion der Carbonylfunktion aus Zuckern entstehen. Hierbei werden insbesondere Monosaccharid-Zuckeralkohole und Disaccharid-Zuckeralkohole unterschieden. Für weitergehende Einzelheiten zu dem Begriff der Zuckeralkohole kann insbesondere verwiesen werden auf Römpp Lexikon Chemie, 10. Auflage, Georg-Thieme-Verlag, Stuttgart/New York, Band 6, 1999, Seite 5097, Stichwort: "Zuckeralkohole", und auf Römpp Lexikon Lebensmittelchemie, 9. Auflage, Georg-Thieme-Verlag, Stuttgart/New York, 1995, Seiten 1953/954, Stichwort: "Zuckeralkohole" sowie auf die dort jeweils referierte Literatur, deren jeweiliger Inhalt durch Bezugnahme eingeschlossen ist.

Besonders bevorzugt enthält die Zusammensetzung mindestens einen Agglomeratbildner, der insbesondere ausgewählt ist aus Zuckeraustauschstoffen und/oder Polysacchariden, insbesondere aus Zuckeralkoholen, wie Erythrit, Mannit, Xylit, Sorbit (D-Glucit), Isomaltit (Isomalt), Maltit, Galactit oder Lactit, aus Stärke oder Stärkederivaten, insbesondere Stärkeabbauprodukten, wie Dextrinen und/oder Maltodextrinen, sowie deren Mischungen, insbesondere wobei Dextrine und/oder Maltodextrine, bevorzugt Maltodextrine, besonders bevorzugt sind.

Die Menge an Sucralose liegt erfindungsgemäß zwischen 0,001 und 20 Gew.-%, bevorzugt zwischen 0,01 und 10 Gew.-%, bevorzugter zwischen 0,1 und 5 Gew.-%, besonders bevorzugt zwischen 0,5 und 2 Gew.-%, bezogen auf die Zusammensetzung.

Die Menge an Agglomeratbildner liegt zwischen 50 und 99,999 Gew.-%, bevorzugt 80 und 99,9 Gew.-% und bevorzugter zwischen 98 und 99,5 Gew.-%, bezogen auf die Zusammensetzung.

Darüber hinaus kann die Zusammensetzung weitere Inhaltsstoffe und/oder Additive enthalten.

Gemäß einer bevorzugten Ausführungsform der erfindungsgemäßen Zusammensetzung enthält die Zusammensetzung mindestens einen weiterem Inhaltsstoff und/oder mindestens ein weiteres Additiv, insbesondere ausgewählt aus Aromen oder Aromastoffen, Säuerungsmitteln, Konservierungsmitteln, Farbstoffen, Vitaminen, Mineralstoffen, Stabilisatoren, konsistenzsteuernden Mitteln, Verdickungsmittel sowie deren Mischungen.

Bei diesem Aspekt der erfindungsgemäßen Zusammensetzung ist es von besonderer Bedeutung, dass die agglomerierte Zusammensetzung in Form einer leichten Masse vorliegt, da das Pulver als Streu- oder Tafelsüße eingesetzt wird und eine geringe Schüttdichte aufweisen sollte, um so die Attraktivität des Produkts für den Verbraucher zu erhöhen.

Im Rahmen der vorliegenden Erfindung liegt die Schüttdichte der Zusammensetzung im Bereich von 50 bis 120 g/l und vorzugsweise 60 und 100 g/l. Die Schüttdichte stellt sich einerseits insbesondere durch die Auswahl der in Zusammensetzung erfindungsgemäß verwendeten Komponenten ein.

Andererseits kann die Schüttdichte des Produkts auch durch das Herstellungsverfahren beeinflusst werden. Gemäß einer bevorzugten Ausführungsform der erfindungsgemäßen Zusammensetzung ist diese durch Sprühtrocknung erhältlich, insbesondere durch Sprühtrocknung einer Lösung, insbesondere einer wässrigen Lösung, der Zusammensetzung, vorzugsweise unter Aufschäumen.

Unter dem Begriff der Schüttdichte ist im allgemeinen der Quotient aus der Masse und dem eingenommenen Volumen, das Zwischenräume und, falls zusätzlich vorhanden, auch Hohlräume (z. B. Poren) einschließt, zu verstehen. Zur Bestimmung der Schüttdichte kann insbesondere auf die DIN ISO 607: 1984-01 verwiesen werden. Man bestimmt die Schüttdichte beispielsweise, indem man die betreffende Zusammensetzung in einen Messkasten, Messbecher, Messzylinder oder dergleichen schüttet und das Gewicht feststellt. Höher als die Schüttdichte, deren Reziprokes das Schüttvolumen ist, liegen die sogenannte Rütteldichte und erst recht die sogenannte Stampfdichte. Für weitere Einzelheiten zum Begriff der Schüttdichte kann insbesondere verwiesen werden auf Römpp Chemielexikon, 10. Auflage, Georg-Thieme-Verlag, Stuttgart/New York, Band 5, 1998, Seite 3990, Stichwort: "Schüttdichte".

Die erfindungsgemäße Zusammensetzung besitzt einen gewissen Feuchtegehalt (Restfeuchte). So sollte die erfindungsgemäße Zusammensetzung, bezogen auf die Zusammensetzung und/oder das Granulat, eine Gesamtrestfeuchte von 2 bis 5 Gew.-%, aufweisen. Der maximale Gesamtrestfeuchtegehalt sollte in diesem Zusammenhang 5 Gew.-%, vorzugsweise 4 Gew.-%, bezogen auf die Zusammensetzung, nicht überschreiten. Die Einstellung des Feuchtigkeitsgehaltes bzw. der Gesamtrestfeuchte in der Zusammensetzung dient einerseits der Erhöhung der Stabilität, insbesondere der Lagerungs- und Alterungsbeständigkeit, und zum anderen der Verbesserung der Verklumpungseigenschaften. In diesem Zusammenhang bezieht sich der Begriff "Gesamtrestfeuchte", wie er im Rahmen der vorliegenden Erfindung verwendet wird, auf den Gesamtfeuchtegehalt der erfindungsgemäßen Zusammensetzung und umfasst somit sowohl zugegebene Feuchtigkeit, beispielsweise in Form von Wasser, als auch bereits in den Komponenten inhärent vorhandene Feuchtigkeit, wie beispielsweise Kristallwasser oder dergleichen.

Aufgrund der bevorzugten Verwendung der Zusammensetzung als Streu- oder Tafelsüße sollte die Zusammensetzung eine geringe Schüttdichte aufweisen, um eine leicht erscheinende Masse darzustellen. Gleichzeitig sollte die Süßkraft in Bezug auf das Volumen der Zusammensetzung etwa mit den herkömmlichen Zuckern oder Süßungsmitteln vergleichbar sein. Dies wird erreicht durch Einstellung der Süßkraft, indem die Komponenten der Zusammensetzung ausgewogen zusammengestellt werden.

Dementsprechend zeigt eine bevorzugte erfindungsgemäße Zusammensetzung eine gewichtsbezogene Süßkraft, die etwa der 2- bis 100fachen, insbesondere der 3-bis 50fachen, ganz besonders bevorzugt der 4- bis 8fachen Süßkraft von Saccharose entspricht und/oder eine volumenbezogene Süßkraft, die der 0,5- bis 2fachen, insbesondere der 0,8 bis 1,2-fachen, ganz besonders bevorzugt etwa derselben volumenbezogenen Süßkraft von Saccharose entspricht.

Erfindungsgemäß sollte aber die Süßkraft bei einem niedrigen Brennwert erreicht werden. Gemäß einer bevorzugten Ausführungsform der Erfindung liegt der physiologische Brennwert der Zusammensetzung im Bereich von 0,5 bis 10 kcal/g, insbesondere im Bereich von 2 bis 6 kcal/g, vorzugsweise im Bereich von 2,5 bis 3,6 kcal/g.

Ein wichtiger Parameter der festen Zusammensetzung ist die Teilchengröße der Agglomerate. Ein zu großer Teilchendurchmesser lässt die Zusammensetzung als zu grob und damit unattraktiv erscheinen. Ein zu kleiner Teilchendurchmesser erzeugt eine staubende Masse. Bei der erfindungsgemäßen Zusammensetzung weisen die Agglomerate eine mittlere Teilchengröße der Agglomerate, bestimmt als D₅₀-Wert, im Bereich von 50 bis 250 µm auf. Bevorzugt weisen 80 % der Agglomeratteilchen Teilchendurchmesser im Bereich von 75 bis 175 µm, vorzugsweise 100 bis 150 µm, auf.

Für weitergehende diesbezügliche Einzelheiten zu diesem Erfindungsaspekt kann Bezug genommen werden auf die obigen Ausführungen zu den übrigen erfindungsgemäßen Aspekt, welche in Bezug auf den vorliegenden Erfindungsaspekt entsprechend gelten.

Weiterer Gegenstand der vorliegenden Erfindung - gemäß einem **zweiten** Aspekt der vorliegenden Erfindung - ist ein Verfahren zur Herstellung einer Zusammensetzung gemäß dem dritten Aspekts der vorliegenden Erfindung, wobei bei dem Verfahren Sucralose oder ein Sucralosederivat zusammen mit mindestens einem Agglomeratbildner agglomeriert wird, vorzugsweise mittels Sprühtrocknung.

Gemäß eines bevorzugten erfindungsgemäßen Verfahrens erfolgt die Agglomeration, insbesondere Sprühtrocknung, unter Einstellung von Teilchengröße und/oder Restfeuchte und/oder Schüttdichte. Dies geschieht in der dem Fachmann an sich bekannten Weise.

Für weitergehende diesbezügliche Einzelheiten zu diesem Erfindungsaspekt kann Bezug genommen werden auf die obigen Ausführungen zu den übrigen erfindungsgemäßen Aspekten, welche in Bezug auf diesen Erfindungsaspekt entsprechend gelten.

Üblicherweise werden die Ausgangsmaterialien, die sprühgetrocknet werden sollen, vor dem Sprühtrocknungsvorgang gelöst oder dispergiert (üblicherweise in Wasser), wobei die resultierende Lösung oder Dispersion (insbesondere mit einem Trockensubstanzanteil, bezogen auf die Lösung oder Dispersion, 20 bis 80 Gew.-%. Vorzugsweise 30 bis 60 Gew.-%) dann zunächst (aus mikrobiologischen Gründen) noch vor der Sprühtrocknung auf eine definierte Temperatur erhitzt und für eine definierte Zeitdauer bei dieser Temperatur gehalten wird. Vorteilhafterweise erfolgt das Erhitzen der Lösung oder Dispersion vor der Sprühtrocknung auf Temperaturen von höchstens 95 °C, insbesondere höchstens 80 °C, bevorzugt im Bereich von 30 bis 90 °C, vorzugsweise 35 bis 80 °C, insbesondere mit Haltezeiten von höchstens 3 Minuten, vorzugsweise höchstens 2,5 Minuten, besonders bevorzugt höchstens 2 Minuten. Hierdurch können insbesondere die eingangs beschriebenen sensorischen Veränderungen ausgeschlossen werden.

Um die eingangs beschriebenen sensorischen Veränderungen auszuschließen, werden erfindungsgemäß also die an sich üblichen Temperatur- und Zeitprofile für die Vorbehandlung der nachfolgend der Sprühtrocknung zu unterziehenden Lösung bzw. Dispersion der Ausgangsmaterialien gegenüber herkömmlichen Bedingungen modifiziert: Während üblicherweise die Ausgangsmaterialien, die sprühgetrocknet werden sollen, gelöst bzw. dispergiert werden, wobei die Lösung bzw. Dispersion dabei im allgemeinen einen Trockensubstanzanteil von 30 Gew.-% bis 60 Gew.-% hat und aus mikrobiologischen Gründen diese Lösung auf Temperaturen über 95 °C erhitzt und während einer Zeit von 3,0 Minuten gehalten wird, kann erfindungsgemäß diese Temperatur auf 55 °C bis 80 °C begrenzt und die Heißhaltezeit auf höchstens 1,5 Minuten reduziert werden.

Weiterer Gegenstand der vorliegenden Erfindung - gemäß einem dritten Aspekt der vorliegenden Erfindung - ist die Verwendung der erfindungsgemäßen Zusammensetzungen gemäß dem ersten und dritten Erfindungsaspekt zum Süßen von Lebensmitteln, insbesondere Getränken oder anderen flüssigen bis pastösen Nahrungsmitteln oder aber von festen Nahrungsmitteln.

Für weitergehende diesbezügliche Einzelheiten zu diesem Erfindungsaspekt kann Bezug genommen werden auf die obigen Ausführungen zu den übrigen erfindungsgemäßen Aspekten, welche in Bezug auf die erfindungsgemäße Verwendung entsprechend gelten.

Weitere Ausgestaltungen, Abwandlungen und Variationen sowie Vorteile der vorliegenden Erfindung sind für den Fachmann beim Lesen der Beschreibung ohne weiteres erkennbar und realisierbar, ohne dass er dabei den Rahmen der vorliegenden Erfindung verlässt.

Die vorliegende Erfindung wird anhand der folgenden Ausführungsbeispiele veranschaulicht, welche die vorliegende Erfindung jedoch nicht beschränken.

### Ausführungsbeispiele:

### 1. Beispielrezepturen für Süßstofftabletten (nicht erfindungsgemäß):

| Beispiel Süßstofftablette 1 (Vergleich) | |
|---|---|
| 5 - 70 % | L-Aspartyl-L-phenylalanin (Aspartam) |
| 30 - 90 % | D-Galactopyranosyl-β-(1-4)-D-glucopyranose (Laktose) |
| 1 - 15 % | Carboxymethylcellulose |

| Beispiel Süßstofftablette 2 (Vergleich) | |
|---|---|
| 1 - 7 % | Benzoesäuresulfimid (Saccharin) |
| 10 - 70 % | Natriumcyclohexylsulfamat (Cyclamat) |
| 1 - 10 % | D-Galactopyranosyl-β-(1-4)-D-glucopyranose (Laktose) |
| 1 - 15 % | Natriumcitrat |

| Beispiel Süßstofftablette 3 (Vergleich) | |
|---|---|
| 1 - 20 % | L-Aspartyl-L-phenylalanin (Aspartam) |
| 2 - 40 % | 6-Methyl-3,4-dihydro-1,2,3-oxathiazin-4-on-2,2-dioxid (Acesulfam) |
| 5 - 50 % | D-Galactopyranosyl-β-(1-4)-D-glucopyranose (Laktose) |
| 1 - 4 % | 2-Amino-4-methyl-pentan-1-säure (Leucin) |
| 1 - 15 % | Carboxymethylcellulose |

| Beispiel Süßstofftablette 4 (Vergleich) | |
|---|---|
| 14 - 36 % | Trichlorgalaktosaccharose (Sucralose) |
| 30 - 60 % | D-Galactopyranosyl-β-(1-4)-D-glucopyranose (Laktose) |
| 1 - 15 % | α-1,4/α-1,6-glycosidisch verknüpfte Polymere (Polysaccharid) |

| Beispiel Süßstofftablette 5 | |
|---|---|
| 10 - 20 % | Trichlorgalaktosaccharose (Sucralose) |
| 4 - 16 % | 2-Amino-4-methyl-pentan-1-säure (Leucin) |
| 30 - 60 % | D-Galactopyranosyl-β-(1-4)-D-glucopyranose (Laktose) |
| 1 - 15 % | α-1,4/α-1,6-glycosidisch verknüpfte Polymere (Polysaccharid) |

### Versuchsreihe 1

Alle Rezepturen wurden in der üblichen Weise hergestellt. Dabei wurden alle Rohwaren für die jeweilige Anwendung abgewogen und miteinander vermischt. Die einzelnen Chargen wurden gepresst. Als Presse wurde eine Versuchspresse der Firma Kilian der Baureihe NRD 33 eingesetzt. Als maximaler Pressdruck stehen hier 10 Tonnen zur Verfügung. Bis auf die Beispielrezeptur 4 konnten allen Varianten problemlos gepresst werden. Das Beispiel 4 dagegen ließ sich schlecht pressen. Die Mischung klebte an den Stempeln und die einzelnen Tablettengewichte schwankten stark. Auch die Tablettenform war ungenügend.

### Versuchsreihe 2

Die Beispiele 1 bis 3 wurden wie gewohnt gemischt und ohne Beanstandungen gepresst. Eine Rezeptur gemäß Beispiel 5 wurde so gemischt, dass erst die Sucralose mit dem Leucin vermischt wird. Nach Zugabe der weiteren Komponenten und deren Vermischung wurde alles gepresst. Das Ergebnis war eine noch weiter verbesserte, insbesondere stabilere Tablettenqualität.

### Versuchsreihe 3

Es wurden nur noch Mischungsvarianten des Beispiels 5 gemischt und verpresst. Die Variante, bei welcher nur ein Teil des Leucins mit der Sucralose vorgemischt wurde, dann die Stärke, dann die Laktose und zum Schluss das Leucin zugegeben wurde, erzielte nochmals verbesserte Tablettenqualitäten.

### Ergebnis

Während die Rezepturen der Beispiele 1 bis 3 in der Versuchsreihe 1 und 2 Tablettenhärten von 8 bis 18 N liefern, liefern die Rezepturen gemäß Beispiel 5 in der Versuchsreihe 1 Tabletten mit vergleichbaren Härten, welche in den Versuchsreihen 2 und 3 dann noch um 15 % (Versuchsreihe 2) bzw. 25 % (Versuchsreihe 3) gesteigert werden konnten.

Nach Abschluss der Technikumsversuche wurden die Mischungen auf Produktionspressen, wie sie beispielsweise von den Herstellerfirmen Fette und Kilian bekannt sind, wiederholt. Dabei konnten vergleichbare Ergebnisse mit den Mischungsvarianten des Beispiels 5 erzielt werden wie im Technikumsmaßstab entsprechend den vorangehenden Versuchsreihen 1 bis 3.

In nachfolgenden Stabilitätsversuchen, die bei unterschiedlichen Lagerbedingungen (Temperatur und Zeit) ausgeführt wurden, konnten keinerlei Stabilitätsverluste und keinerlei sensorische Veränderungen festgestellt werden.

### 2. Herstellung erfindungsgemäßer Streusüßen (Tafelsüßen) als Agglomerate:

Beispielrezepturen für erfindungsgemäße Streusüßen (Tafelsüßen):

| Beispiel Tafelsüße (Streusüße) 1 (Erfindung) |
|---|
| 0,1 - 5 % Sucralose |
| 95 - 99,9 % Maltodextrin |

| Beispiel Tafelsüße (Streusüße) 2 (Erfindung) |
|---|
| 0,1 - 5 % Sucralose |
| 95 - 99,9 % Dextrin |

| Beispiel Tafelsüße (Streusüße) 3 (Erfindung) |
|---|
| 0,1 - 5 % Sucralose |
| 95 - 99,9 % Maltodextrin und Dextrin (1 : 1-Mischung) |

| Beispiel Tafelsüße (Streusüße) 4 (Erfindung) |
|---|
| 0,1 - 3 % Sucralose |
| 75 - 95 % Maltodextrin und/oder Dextrin |
| 0,01 - 10 % D-Galactopyranosyl-ß-(1-4)-D-glucopyranose (Laktose) |
| 0,01 - 5 % Carboxymethylcellulose |
| 0,001 - 2 % Natriumcitrat |

Die Ausgangsmaterialien entsprechend den vorgenannten Ausgangsrezepturen wurden zunächst in Wasser gelöst. Die Lösungen hatten einen Trockensubstanzanteil von etwa 30 % bis etwa 60 %.

Vor der Sprühtrocknung wurden die resultierenden Lösungen aus mikrobiologischen Gründen erhitzt. Um die eingangs beschriebenen sensorischen Veränderungen auszuschließen, wurden die hierfür an sich üblichen Temperatur- und Zeitprofile modifiziert: Während üblicherweise die Ausgangsmaterialien, die sprühgetrocknet werden sollen, gelöst werden, wobei die Lösung dabei im Durchschnitt einen Trockensubstanzanteil von 30 % bis 60 % hat und aus mikrobiologischen Gründen diese Lösung auf Temperaturen über 95 °C erhitzt und während einer Zeit von 3,0 Minuten gehalten wird, wurde erfindungsgemäß die Temperatur auf 55 °C bis 80 °C begrenzt und die Heißhaltezeit auf 1,5 Minuten reduziert.

Nachfolgend wurden die auf diese Weise behandelten Lösungen jeweils einer Sprühtrocknung unter dem Fachmann an sich bekannten Bedingungen unterzogen, so dass die entsprechenden Agglomerate resultierten (mittlere Teilchengröße der Agglomerate, bestimmt als D₅₀-Wert, im Bereich von 50 bis 250 µm; 80 % der Agglomeratteilchen mit Teilchendurchmessern im Bereich von 100 bis 150 µm). Die Schüttdichten der betreffenden Tafel- bzw. Streusüßen wurden im Bereich von 60 und 100 g/l und die Gesamtrestfeuchte, bezogen auf die Zusammensetzung, auf Werte im Bereich von 0,5 bis 5 Gew.-% eingestellt. Im Rahmen von Vergleichsversuche wurde gefunden, dass im Fall geringerer Restfeuchten die Agglomerate instabil sind, während bei höheren Restfeuchten, insbesondere oberhalb von 8 Gew.-%, die resultierenden Agglomerate sowohl ihre Stabilität als auch ihre Fließfähigkeit einbüßen.

Die gewichtsbezogene Süßkraft der resultierenden Tafel- bzw. Streusüßen entsprach in etwa der 4- bis 8fachen Süßkraft von Saccharose und die volumenbezogene Süßkraft in etwa der 0,8 bis 1,2-fachen Süßkraft von Saccharose. Der physiologische Brennwert der resultierenden Tafel- bzw. Streusüßen betrug ca. 2,5 bis 3,6 kcal/g. Dies ermöglicht eine Dosierung und Handhabung wie herkömmlicher Tafelzucker.

Für weitergehende diesbezügliche Einzelheiten zu diesem Erfindungsaspekt kann Bezug genommen werden auf die obigen Ausführungen zu den übrigen erfindungsgemäßen Aspekt, welche in Bezug auf den vorliegenden Erfindungsaspekt entsprechend gelten.

Weiterer Gegenstand der vorliegenden Erfindung - gemäß einem vierten Aspekt der vorliegenden Erfindung - ist ein Verfahren zur Herstellung einer Zusammensetzung gemäß dem dritten Aspekts der vorliegenden Erfindung, wobei bei dem Verfahren Sucralose oder ein Sucralosederivat zusammen mit mindestens einem Agglomeratbildner agglomeriert wird, vorzugsweise mittels Sprühtrocknung.

Gemäß eines bevorzugten erfindungsgemäßen Verfahrens erfolgt die Agglomeration, insbesondere Sprühtrocknung, unter Einstellung von Teilchengröße und/oder Restfeuchte und/oder Schüttdichte. Dies geschieht in der dem Fachmann an sich bekannten Weise.

Für weitergehende diesbezügliche Einzelheiten zu diesem Erfindungsaspekt kann Bezug genommen werden auf die obigen Ausführungen zu den übrigen erfindungsgemäßen Aspekten, welche in Bezug auf diesen Erfindungsaspekt entsprechend gelten.

Üblicherweise werden die Ausgangsmaterialien, die sprühgetrocknet werden sollen, vor dem Sprühtrocknungsvorgang gelöst oder dispergiert (üblicherweise in Wasser), wobei die resultierende Lösung oder Dispersion (insbesondere mit einem Trockensubstanzanteil, bezogen auf die Lösung oder Dispersion, 20 bis 80 Gew.-%. Vorzugsweise 30 bis 60 Gew.-%) dann zunächst (aus mikrobiologischen Gründen) noch vor der Sprühtrocknung auf eine definierte Temperatur erhitzt und für eine definierte Zeitdauer bei dieser Temperatur gehalten wird. Vorteilhafterweise erfolgt das Erhitzen der Lösung oder Dispersion vor der Sprühtrocknung auf Temperaturen von höchstens 95 °C, insbesondere höchstens 80 °C, bevorzugt im Bereich von 30 bis 90 °C, vorzugsweise 35 bis 80 °C, insbesondere mit Haltezeiten von höchstens 3 Minuten, vorzugsweise höchstens 2,5 Minuten, besonders bevorzugt höchstens 2 Minuten. Hierdurch können insbesondere die eingangs beschriebenen sensorischen Veränderungen ausgeschlossen werden.

Um die eingangs beschriebenen sensorischen Veränderungen auszuschließen, werden erfindungsgemäß also die an sich üblichen Temperatur- und Zeitprofile für die Vorbehandlung der nachfolgend der Sprühtrocknung zu unterziehenden Lösung bzw. Dispersion der Ausgangsmaterialien gegenüber herkömmlichen Bedingungen modifiziert: Während üblicherweise die Ausgangsmaterialien, die sprühgetrocknet werden sollen, gelöst bzw. dispergiert werden, wobei die Lösung bzw. Dispersion dabei im allgemeinen einen Trockensubstanzanteil von 30 Gew.-% bis 60 Gew.-% hat und aus mikrobiologischen Gründen diese Lösung auf Temperaturen über 95 °C erhitzt und während einer Zeit von 3,0 Minuten gehalten wird, kann erfindungsgemäß diese Temperatur auf 55 °C bis 80 °C begrenzt und die Heißhaltezeit auf höchstens 1,5 Minuten reduziert werden.

Weiterer Gegenstand der vorliegenden Erfindung - gemäß einem **fünften** Aspekt der vorliegenden Erfindung - ist die Verwendung der erfindungsgemäßen Zusammensetzungen gemäß dem ersten und dritten Erfindungsaspekt zum Süßen von Lebensmitteln, insbesondere Getränken oder anderen flüssigen bis pastösen Nahrungsmitteln oder aber von festen Nahrungsmitteln.

Für weitergehende diesbezügliche Einzelheiten zu diesem Erfindungsaspekt kann Bezug genommen werden auf die obigen Ausführungen zu den übrigen erfindungsgemäßen Aspekten, welche in Bezug auf die erfindungsgemäße Verwendung entsprechend gelten.

Weitere Ausgestaltungen, Abwandlungen und Variationen sowie Vorteile der vorliegenden Erfindung sind für den Fachmann beim Lesen der Beschreibung ohne weiteres erkennbar und realisierbar, ohne dass er dabei den Rahmen der vorliegenden Erfindung verlässt.

Die vorliegende Erfindung wird anhand der folgenden Ausführungsbeispiele veranschaulicht, welche die vorliegende Erfindung jedoch nicht beschränken.

### Ausführungsbeispiele:

### 1. Beispielrezepturen für erfindungsgemäße Süßstofftabletten:

| Beispiel Süßstofftablette 1 (Vergleich) | |
|---|---|
| 5 - 70 % | L-Aspartyl-L-phenylalanin (Aspartam) |
| 30 - 90 % | D-Galactopyranosyl-ß-(1-4)-D-glucopyranose (Laktose) |
| 1 - 15 % | Carboxymethylcellulose |

| Beispiel Süßstofftablette 2 (Vergleich) | |
|---|---|
| 1 - 7 % | Benzoesäuresulfimid (Saccharin) |
| 10 - 70 % | Natriumcyclohexylsulfamat (Cyclamat) |
| 1 - 10 % | D-Galactopyranosyl-ß-(1-4)-D-glucopyranose (Laktose) |
| 1 - 15 % | Natriumcitrat |

| | |
|---|---|
| Beispiel Süßstofftablette 3 (Vergleich) | |
| 1 - 20 % | L-Aspartyl-L-phenylalanin (Aspartam) |
| 2 - 40 % | 6-Methyl-3,4-dihydro-1,2,3-oxathiazin-4-on-2,2-dioxid (Acesulfam) |
| 5 - 50 % | D-Galactopyranosyl-β-(1-4)-D-glucopyranose (Laktose) |
| 1 - 4 % | 2-Amino-4-methyl-pentan-1-säure (Leucin) |
| 1 - 15 % | Carboxymethylcellulose |

| Beispiel Süßstofftablette 4 (Vergleich) | |
|---|---|
| 14 - 36 % | Trichlorgalaktosaccharose (Sucralose) |
| 30 - 60 % | D-Galactopyranosyl-β-(1-4)-D-glucopyranose (Laktose) |
| 1 - 15 % | α-1,4/α-1,6-glycosidisch verknüpfte Polymere (Polysaccharid) |

| Beispiel Süßstofftablette 5 (Erfindung) | |
|---|---|
| 10 - 20 % | Trichlorgalaktosaccharose (Sucralose) |
| 4 - 16 % | 2-Amino-4-methyl-pentan-1-säure (Leucin) |
| 30 - 60 % | D-Galactopyranosyl-β-(1-4)-D-glucopyranose (Laktose) |
| 1 - 15 % | α-1,4/α-1,6- glycosidisch verknüpfte Polymere (Polysaccharid) |

### Versuchsreihe 1

Alle Rezepturen wurden in der üblichen Weise hergestellt. Dabei wurden alle Rohwaren für die jeweilige Anwendung abgewogen und miteinander vermischt. Die einzelnen Chargen wurden gepresst. Als Presse wurde eine Versuchspresse der Firma Kilian der Baureihe NRD 33 eingesetzt. Als maximaler Pressdruck stehen hier 10 Tonnen zur Verfügung. Bis auf die Beispielrezeptur 4 konnten allen Varianten problemlos gepresst werden. Das Beispiel 4 dagegen ließ sich schlecht pressen. Die Mischung klebte an den Stempeln und die einzelnen Tablettengewichte schwankten stark. Auch die Tablettenform war ungenügend.

### Versuchsreihe 2

Die Beispiele 1 bis 3 wurden wie gewohnt gemischt und ohne Beanstandungen gepresst. Eine Rezeptur gemäß Beispiel 5 wurde so gemischt, dass erst die Sucralose mit dem Leucin vermischt wird. Nach Zugabe der weiteren Komponenten und deren Vermischung wurde alles gepresst. Das Ergebnis war eine noch weiter verbesserte, insbesondere stabilere Tablettenqualität.

### Versuchsreihe 3

Es wurden nur noch Mischungsvarianten des Beispiels 5 gemischt und verpresst. Die Variante, bei welcher nur ein Teil des Leucins mit der Sucralose vorgemischt wurde, dann die Stärke, dann die Laktose und zum Schluss das Leucin zugegeben wurde, erzielte nochmals verbesserte Tablettenqualitäten.

### Ergebnis

Während die Rezepturen der Beispiele 1 bis 3 in der Versuchsreihe 1 und 2 Tablettenhärten von 8 bis 18 N liefern, liefern die erfindungsgemäßen Rezepturen gemäß Beispiel 5 in der Versuchsreihe 1 Tabletten mit vergleichbaren Härten, welche in den Versuchsreihen 2 und 3 dann noch um 15 % (Versuchsreihe 2) bzw. 25 % (Versuchsreihe 3) gesteigert werden konnten.

Nach Abschluss der Technikumsversuche wurden die Mischungen auf Produktionspressen, wie sie beispielsweise von den Herstellerfirmen Fette und Kilian bekannt sind, wiederholt. Dabei konnten vergleichbare Ergebnisse mit den erfindungsgemäßen Mischungsvarianten des Beispiels 5 erzielt werden wie im Technikumsmaßstab entsprechend den vorangehenden Versuchsreihen 1 bis 3.

In nachfolgenden Stabilitätsversuchen, die bei unterschiedlichen Lagerbedingungen (Temperatur und Zeit) ausgeführt wurden, konnten keinerlei Stabilitätsverluste und keinerlei sensorische Veränderungen festgestellt werden.

### 2. Herstellung erfindungsgemäßer Streusüßen (Tafelsüßen) als Agglomerate:

### Beispielrezepturen für erfindungsgemäße Streusüßen (Tafelsüßen):

| Beispiel Tafelsüße (Streusüße) 1 (Erfindung) |
|---|
| 0,1 - 5 % Sucralose |
| 95 - 99,9 % Maltodextrin |

| Beispiel Tafelsüße (Streusüße) 2 (Erfindung) |
|---|
| 0,1 - 5 % Sucralose |
| 95 - 99,9 % Dextrin |

| Beispiel Tafelsüße (Streusüße) 3 (Erfindung) |
|---|
| 0,1 - 5 % Sucralose |
| 95 - 99,9 % Maltodextrin und Dextrin (1 : 1-Mischung) |

| Beispiel Tafelsüße (Streusüße) 4 (Erfindung) |
|---|
| 0,1 - 3 % Sucralose |
| 75 - 95 % Maltodextrin und/oder Dextrin |
| 0,01 - 10 % D-Galactopyranosyl-ß-(1-4)-D-glucopyranose (Laktose) |
| 0,01 - 5 % Carboxymethylcellulose |
| 0,001 - 2 % Natriumcitrat |

Die Ausgangsmaterialien entsprechend den vorgenannten Ausgangsrezepturen wurden zunächst in Wasser gelöst. Die Lösungen hatten einen Trockensubstanzanteil von etwa 30 % bis etwa 60 %.

Vor der Sprühtrocknung wurden die resultierenden Lösungen aus mikrobiologischen Gründen erhitzt. Um die eingangs beschriebenen sensorischen Veränderungen auszuschließen, wurden die hierfür an sich üblichen Temperatur- und Zeitprofile modifiziert: Während üblicherweise die Ausgangsmaterialien, die sprühgetrocknet werden sollen, gelöst werden, wobei die Lösung dabei im Durchschnitt einen Trockensubstanzanteil von 30 % bis 60 % hat und aus mikrobiologischen Gründen diese Lösung auf Temperaturen über 95 °C erhitzt und während einer Zeit von 3,0 Minuten gehalten wird, wurde erfindungsgemäß die Temperatur auf 55 °C bis 80 °C begrenzt und die Heißhaltezeit auf 1,5 Minuten reduziert.

Nachfolgend wurden die auf diese Weise behandelten Lösungen jeweils einer Sprühtrocknung unter dem Fachmann an sich bekannten Bedingungen unterzogen, so dass die entsprechenden Agglomerate resultierten (mittlere Teilchengröße der Agglomerate, bestimmt als D₅₀-Wert, im Bereich von 50 bis 250 µm; 80 % der Ag-glomeratteilchen mit Teilchendurchmessern im Bereich von 100 bis 150 µm). Die Schüttdichten der betreffenden Tafel- bzw. Streusüßen wurden im Bereich von 60 und 100 g/l und die Gesamtrestfeuchte, bezogen auf die Zusammensetzung, auf Werte im Bereich von 0,5 bis 5 Gew.-% eingestellt. Im Rahmen von Vergleichsversuche wurde gefunden, dass im Fall geringerer Restfeuchten die Agglomerate instabil sind, während bei höheren Restfeuchten, insbesondere oberhalb von 8 Gew.-%, die resultierenden Agglomerate sowohl ihre Stabilität als auch ihre Fließfähigkeit einbüßen.

Die gewichtsbezogene Süßkraft der resultierenden Tafel- bzw. Streusüßen entsprach in etwa der 4- bis 8fachen Süßkraft von Saccharose und die volumenbezogene Süßkraft in etwa der 0,8 bis 1,2-fachen Süßkraft von Saccharose. Der physiologische Brennwert der resultierenden Tafel- bzw. Streusüßen betrug ca. 2,5 bis 3,6 kcal/g. Dies ermöglicht eine Dosierung und Handhabung wie herkömmlicher Tafelzucker.

## Patentansprüche

1. Zusammensetzung mit reduziertem physiologischem Brennwert (Energiegehalt) zum Süßen von Lebensmitteln in Form einer Streu- oder Tafelsüße, wobei die Zusammensetzung in Form von Agglomeraten vorliegt und mindestens einen Süßstoff als Süßungsmittel sowie mindestens einen Agglomeratbildner umfasst,
- wobei der Süßstoff Sucralose ist und die Menge an Sucralose zwischen 0,001 und 20 Gew.-%, bezogen auf die Zusammensetzung, liegt;
- wobei der Agglomeratbildner ausgewählt ist aus Zuckeraustauschstoffen und/oder Polysacchariden und die Menge an Agglomeratbildner zwischen 50 und 99,999 Gew.-%, bezogen auf die Zusammensetzung, liegt;
- wobei die Schüttdichte der Zusammensetzung im Bereich von 50 bis 120 g/l liegt;
- wobei die Zusammensetzung, bezogen auf die Zusammensetzung, eine Gesamtrestfeuchte von 2 bis 5 Gew.-% aufweist;
**dadurch gekennzeichnet,**
**dass** die mittlere Teilchengröße der Agglomerate, bestimmt als D₅₀-Wert, im Bereich von 50 bis 250 µm liegt und 80 % der Agglomeratteilchen Teilchendurchmesser im Bereich von 75 bis 175 µm aufweisen.

2. Zusammensetzung nach Anspruch 1, wobei der Agglomeratbildner ausgewählt ist aus Zuckeralkoholen, wie Erythrit, Mannit, Xylit, Sorbit (D-Glucit), Isomaltit (Isomalt), Maltit, Galactit oder Lactit, aus Stärke oder Stärkederivaten, insbesondere Stärkeabbauprodukten, wie Dextrinen und/oder Maltodextrinen, sowie deren Mischungen, insbesondere wobei Dextrine und/oder Maltodextrine, bevorzugt Maltodextrine, besonders bevorzugt sind.

3. Zusammensetzung nach Anspruch 1 oder 2, **dadurch gekennzeichnet, dass** die Menge an Sucralose zwischen 0,01 und 10 Gew.-%, bevorzugter zwischen 0,1 und 5 Gew.%, besonders bevorzugt zwischen 0,5 und 2 Gew.-%, bezogen auf die Zusammensetzung, liegt und/oder dass die Menge an Agglomeratbildner zwischen 80 und 99,9 Gew.-% und bevorzugter zwischen 98 und 99,5 Gew.-%, bezogen auf die Zusammensetzung, liegt.

4. Zusammensetzung nach einem der vorangehenden Ansprüche, **dadurch gekennzeichnet, dass** die Zusammensetzung mindestens einen weiterem Inhaltsstoff und/oder mindestens ein weiteres Additiv enthält, insbesondere ausgewählt aus Aromen oder Aromastoffen, Säuerungsmitteln, Konservierungsmitteln, Farbstoffen, Vitaminen, Mineralstoffen, Stabilisatoren, konsistenzsteuernden Mitteln, Verdickungsmittel sowie deren Mischungen.

5. Zusammensetzung nach einem der vorangehenden Ansprüche, **dadurch gekennzeichnet, dass** die Schüttdichte der Zusammensetzung im Bereich von 60 und 100 g/l liegt.

6. Zusammensetzung nach einem der vorangehenden Ansprüche, **dadurch gekennzeichnet, dass** die Zusammensetzung durch Sprühtrocknung erhältlich ist, insbesondere durch Sprühtrocknung einer Lösung, insbesondere einer wässrigen Lösung, der Zusammensetzung, vorzugsweise unter Aufschäumen.

7. Zusammensetzung nach einem der vorangehenden Ansprüche, **dadurch gekennzeichnet, dass** die gewichtsbezogene Süßkraft der Zusammensetzung etwa der 2- bis 100fachen, insbesondere der 3- bis 50fachen, ganz besonders bevorzugt der 4- bis 8fachen Süßkraft von Saccharose entspricht und/oder dass die volumenbezogene Süßkraft der 0,5- bis 2fachen, insbesondere der 0,8 bis 1,2-fachen, ganz besonders bevorzugt etwa derselben volumenbezogenen Süßkraft von Saccharose entspricht.

8. Zusammensetzung nach einem der vorangehenden Ansprüche, **dadurch gekennzeichnet, dass** der physiologische Brennwert der Zusammensetzung im Bereich von 0,5 bis 10 kcal/g, insbesondere im Bereich von 2 bis 6 kcal/g, vorzugsweise im Bereich von 2,5 bis 3,6 kcal/g, liegt.

9. Zusammensetzung nach einem der vorangehenden Ansprüche, **dadurch gekennzeichnet, dass** 80 % der Agglomeratteilchen Teilchendurchmesser im Bereich von 100 bis 150 µm aufweisen.

10. Verfahren zur Herstellung einer Zusammensetzung gemäß den Ansprüchen 1 bis 9,
**dadurch gekennzeichnet,**
**dass** Sucralose oder ein Sucralosederivat zusammen mit mindestens einem Agglomeratbildner agglomeriert wird, vorzugsweise mittels Sprühtrocknung, wobei die Agglomeration, insbesondere Sprühtrocknung, unter Einstellung von Teilchengröße, Restfeuchte und Schüttdichte erfolgt.

11. Verwendung einer Zusammensetzung gemäß einem der Ansprüche 1 bis 9 zum Süßen von Lebensmitteln, insbesondere Getränken oder anderen flüssigen bis pastösen Nahrungsmitteln oder von festen Nahrungsmitteln.

## Claims

1. A composition having reduced physiological calorific value (energy content) for sweetening food in the form of a granulated or table sweetener, wherein the composition is present in the form of agglomerates, and comprises at least one sweetener as the sweetening means, as well as at least one agglomerator,
- wherein the sweetener is sucralose, and the amount of sucralose is between 0.001 and 20% by weight, based on the composition;
- wherein the agglomerator is selected from sugar substitutes and/or polysaccharides, and the amount of the agglomerator is between 50 and 99.999% by weight, based on the composition;
- wherein the bulk density of the composition is in the range of 50 to 120 g/l;
- wherein the composition, based on the composition, has a total residual moisture of 2 to 5% by weight;
**characterized in that**
the mean particle size of the agglomerates, as determined as the D₅₀ value, is in the range of 50 to 250 µm, and 80% of the agglomerate particles have particle diameters in the range of 75 to 175 µm.

2. The composition according to claim 1, wherein the agglomerator is selected from sugar alcohols, such as erythrite, mannite, xylite, sorbite (D-glucite), isomaltite (isomalt), maltite, galactite, or lactate, from starch or starch derivatives, in particular starch decomposition products, such as dextrins and/or maltodextrins, as well as the mixtures thereof, in particular wherein dextrin and/or maltodextrin, preferably maltodextrin, are particularly preferred.

3. The composition according to claims 1 or 2, **characterized in that** the amount of sucralose is between 0.01 and 10% by weight, preferably between 0.1 and 5% by weight, particularly preferred between 0.5 and 2% by weight, based on the composition, and/or the amount of agglomerator is between 80 and 99.9% by weight, and more preferred between 98 and 99.5% by weight, based on the composition.

4. The composition according to one of the previous claims, **characterized in that** the composition comprises at least one additional active ingredient and/or at least one additional additive, in particular selected from flavors or flavorings, acidifiers, preservatives, dyes, vitamins, minerals, stabilizers, consistency-controlling agents, thickeners, as well as the mixtures thereof.

5. The composition according to one of the previous claims, **characterized in that** the bulk density of the composition is in the range of 60 and 100 g/l.

6. The composition according to one of the previous claims, **characterized in that** the composition may be obtained by means of spray drying, in particular by means of spray drying a solution, in particular an aqueous solution, of the composition, preferably while foaming.

7. The composition according to one of the previous claims, **characterized in that** the sweetness of the composition based on weight corresponds approximately 2 to 100 times, in particular 3 to 50 times, most preferred 4 to 8 times the sweetness of saccharose, and/or that the sweetness based on volume corresponds approximately 0.5 to 2 times, in particular 0.8 to 1.2 times, most preferred about the same as the sweetness of saccharose, based on volume.

8. The composition according to one of the previous claims, **characterized in that** the physiological calorific value of the composition is in the range of 0.5 to 10 kcal/g, in particular in the range of 2 to 6 kcal/g, preferably in the range of 2.5 to 3.6 kcal/g.

9. The composition according to one of the previous claims, **characterized in that** 80% of the agglomerate particles have a particle diameter in the range of 100 to 150 µm.

10. A method for the production of a composition according to claims 1 to 9,
**characterized in that**
sucralose, or a sucralose derivative, together with at least one agglomerator, is agglomerated, preferably by means of spray drying, wherein the agglomeration, in particular the spray drying, is carried out with the adjustment of particle size, residual moisture, and bulk density.

11. A use of a composition according to one of the claims 1 to 9 for sweetening food, in particular beverages, or other liquid to paste-like food, or solid food.

## Revendications

1. Composition ayant une valeur énergétique (teneur en énergie) physiologique réduite pour sucrer des produits alimentaires, sous forme d'un édulcorant en poudre ou d'un édulcorant de table, la composition se présentant sous forme d'agglomérés et comprenant au moins un édulcorant en tant qu'agent édulcorant, ainsi qu'au moins un générateur d'agglomérés,
- l'édulcorant étant le sucralose, et la quantité de sucralose étant comprise entre 0,001 et 20 % en poids par rapport à la composition ;
- le générateur d'agglomérés étant choisi parmi les succédanés du sucre et/ou les polysaccharides, et la quantité du générateur d'agglomérés étant comprise entre 50 et 99,999% en poids par rapport à la composition ;
- la masse volumique apparente de la composition étant comprise dans la plage de 50 à 120 g/l ;
- la composition présentant, par rapport à la composition, une humidité totale de 2 à 5 % en poids ;
**caractérisée en ce que** la granulométrie moyenne des agglomérés, déterminée en tant que D₅₀, est comprise dans la plage de 50 à 250 µm, et que 80 % des particules d'agglomérés ont une granulométrie comprise dans la plage de 75 à 175 µm.

2. Composition selon la revendication 1, dans laquelle le générateur d'agglomérés est choisi parmi les alcools de sucre tels que l'érythritol, le mannitol, le xylitol, le sorbitol (D-glucitol), l'isomaltitol (isomaltol), le maltitol, le galactitol ou le lactitol, les amidons ou les dérivés de l'amidon, en particulier les produits de dégradation de l'amidon tels que les dextrines et/ou les maltodextrines, ainsi que leurs mélanges, en particulier les dextrines et/ou les maltodextrines, de préférence les maltodextrines, étant particulièrement préférées.

3. Composition selon la revendication 1 ou 2, **caractérisée en ce que** la quantité du sucralose est comprise entre 0,01 et 10 % en poids, plus préférentiellement entre 0,1 et 5 % en poids, d'une manière particulièrement préférée entre 0,5 et 2 % en poids par rapport à la composition, et/ou que la quantité du générateur d'agglomérés est comprise entre 80 et 99,9 % en poids et plus préférentiellement entre 98 et 99,5 % en poids par rapport à la composition.

4. Composition selon l'une des revendications précédentes, **caractérisée en ce que** la composition contient au moins un constituant supplémentaire et/ou au moins un additif supplémentaire, en particulier choisi parmi les arômes ou les aromatisants, les acidifiants, les conservateurs, les colorants, les vitamines, les substances minérales, les stabilisants, les agents régulateurs de consistance, les épaississants, ainsi que les mélanges de ceux-ci.

5. Composition selon l'une des revendications précédentes, **caractérisée en ce que** la masse volumique apparente de la composition est comprise dans la plage de 60 à 100 g/l.

6. Composition selon l'une des revendications précédentes, **caractérisée en ce que** la composition peut être obtenue par séchage par atomisation, en particulier par séchage par atomisation d'une solution, en particulier d'une solution aqueuse, de la composition, de préférence avec moussage.

7. Composition selon l'une des revendications précédentes, **caractérisée en ce que** la sucrosité de la composition, rapportée au poids, correspond approximativement à 2 à 100 fois, en particulier à 3 à 50 fois, d'une manière tout particulièrement préférée à 4 à 8 fois la sucrosité du saccharose, et/ou que la sucrosité, rapportée au volume, correspond à 0,5 à 2 fois, en particulier à 0,8 à 1,2 fois, d'une manière tout particulièrement préférée approximativement à la même sucrosité rapportée au volume du saccharose.

8. Composition selon l'une des revendications précédentes, **caractérisée en ce que** la valeur énergétique physiologique de la composition est comprise dans la plage de 0,5 à 10 kcal/g, en particulier dans la plage de 2 à 6 kcal/g, de préférence dans la plage de 2,5 à 3,6 kcal/g.

9. Composition selon l'une des revendications précédentes, **caractérisée en ce que** 80 % des particules d'agglomérés présentent une granulométrie comprise dans la plage de 100 à 150 µm.

10. Procédé de fabrication d'une composition selon les revendications 1 à 9, **caractérisé en ce qu'**on agglomère du sucralose ou un dérivé du sucralose, ensemble avec au moins un générateur d'agglomérés, de préférence par séchage par atomisation, l'agglomération, en particulier le séchage par atomisation, étant réalisée avec ajustement de la granulométrie, de l'humidité résiduelle et de la masse volumique apparente.

11. Utilisation d'une composition selon l'une des revendications 1 à 9 pour sucrer des produits alimentaires, en particulier des boissons ou d'autres aliments liquides à pâteux, ou des aliments solides.
